# EUROPEAN PATENT SPECIFICATION

(11) **EP 3 371 845 B1**
(45) Date of publication and mention of the grant of the patent: **25.12.2019**
(21) Application number: 16860097.1
(22) Date of filing: 27.09.2016
(51) Int. Cl.: H01M 4/133, H01M 4/36, H01M 4/587, H01M 4/139, H01M 10/052, H01M 4/62, H01M 4/04, H01M 4/1393, H01M 10/0525, H01M 4/02

(54) **ELECTRODE, BATTERY, AND METHOD FOR MANUFACTURING ELECTRODE**
ELEKTRODE, BATTERIE UND VERFAHREN ZUR HERSTELLUNG EINER ELEKTRODE
ÉLECTRODE, BATTERIE ET PROCÉDÉ DE FABRICATION D'ÉLECTRODE

(30) Priority: 28.10.2015 KR 20150150006
(43) Date of publication of application: 12.09.2018
(73) Proprietor: Samsung Electronics Co., Ltd., Suwon-si, Gyeonggi-do 16677 (KR)
(72) Inventor: KIM, Ki-young, Yongin-si Gyeonggi-do 16807 (KR); BANG, Sung-rok, Hwaseong-si Gyeonggi-do 18444 (KR); KIM, Bong-chul, Seoul 06622 (KR); JUNG, Ji-hoon, Seoul 07569 (KR)
(74) Representative: HGF Limited
(86) International application number: PCT/KR2016/010817
(87) International publication number: WO 2017/073913

(56) References cited:
- WO-A1-2014/092141
- WO-A2-2010/041907
- JP-A- 2000 113 877
- US-A1- 2009 059 474
- US-A1- 2010 136 432
- US-A1- 2014 072 871
- US-A1- 2015 085 424
- KIM, J.-H. ET AL.: 'Effect of carbon types on the electrochemical properties of negative electrodes for Li-ion capacitors' JOURNAL OF POWER SOURCES vol. 196, no. 23, 2011, pages 10490 - 10495, XP028303491

## Description

### Technical Field

Apparatuses and methods consistent with the present disclosure relate to an electrode, a battery, and a method for manufacturing the electrode, and more particularly, to an electrode, a battery, and a method for manufacturing the electrode, for adding hard carbon to control charging speed and lifespan of a battery.

### Background Art

Currently, a chargeable and dischargeable secondary battery has been used as a power source of a medium and large-sized apparatus such as a hybrid vehicle and an electric bicycle that have been gradually demanded as well as a small-sized power source of a cellular phone, a notebook personal computer (PC), a digital camera, and a personal digital assistant (PDA). In addition, an application range of the secondary battery has been extended to an energy storage system (ESS), or the like.

In addition, along with recent proliferation of information technology (IT) apparatuses and electric vehicles, needs for enhanced charging convenience have gradually increased according to an enhanced battery charging speed. It is advantageous to enhance charging performance without additional change in an electrode structure according to improvement in existing software performance via change in a protocol such as charging profile change, but there is a definite limitation in enhancing charging speed.

Graphite is used as a material of an electrode that has been currently and most widely used in a secondary battery industry. In some cases, graphite is used as a main material of a lithium secondary battery, and is also most commercially available for appropriate levels of energy density (e.g., 372 mAh/g), ease of manufacturing, and having a relatively lower price. However, graphite may be reduced in lifespan and capacity while being rapidly charged due to peel by an electrolyte solution and low ratio characteristics and thus it is not possible to use graphite for rapid-speed charging and discharging battery. The relevant prior art can be found in: WO 2014/092141 A1, WO 2010/041907 A2 and JP 2000 113877 A.

Accordingly, there is a need to develop a structure of an electrode for reducing charging time while minimizing reduction in lifespan of the battery.

### Disclosure of Invention

### Technical Problem

Exemplary embodiments of the present disclosure overcome the above disadvantages and other disadvantages not described above. Also, the present disclosure is not required to overcome the disadvantages described above, and an exemplary embodiment of the present disclosure may not overcome any of the problems described above.

The present disclosure provides an electrode, a battery, and a method for manufacturing the electrode, for adding hard carbon to control charging speed and lifespan of a battery.

### Solution to Problem

According to the present invention, an electrode includes a plurality of graphite particles arranged on a current collector so as to have a plurality of pores, and a plurality of hard carbon particles arranged in the pores between the graphite particles, said graphite particles being larger in size than the hard carbon particles, which have a size between 4 µm and 12 µm, wherein the weight percent of the hard carbon particles is between 20% and 35% based on the total weight of graphite and hard carbon, and wherein the graphite particles and the hard carbon particles have loading-level between 5 mg/cm² and 12 mg/cm², according to claim 1. Further a battery of independent claim 7 and a method of independent claim 9 are part of this invention. The optional features are covered by the dependent claims.

The electrode may further include a transition metal mixed with the graphite particles and the hard carbon particles, wherein the transition metal has weight percent between 0.5% and 1%.

The hard carbon particles may each be shaped like at least one of a circular shape, a plate shape, and a linear shape.

Hard carbon particles may be arranged to be coated on a surface of each of the graphite particles.

The hard carbon particles may be arranged in the pores between the graphite particles.

The electrode may further include a coating layer disposed on the graphite particles and the hard carbon particles.

According to another aspect of the present disclosure, a battery includes a current collector, a positive electrode, an electrolyte, and a negative electrode, wherein at least one of the positive electrode and the negative electrode includes a plurality of graphite particles arranged on the current collector so as to have a plurality of pores, and a plurality of hard carbon particles mixed with the graphite particles and having weight percent between 20% and 35%, determined based on charging speed and lifespan of the battery.

One of the positive electrode and the negative electrode may include the plurality of graphite particles arranged on the current collector so as to have the plurality of pores, and the plurality of hard carbon particles mixed with the graphite particles and having weight percent between 20% and 35%, determined based on charging speed and lifespan of the battery, wherein the other one of the electrodes may have at least one of a layer structure, a spinel structure, and an olivine structure.

According to another aspect of the present disclosure, a method for manufacturing an electrode includes mixing a plurality of graphite particles with a plurality of hard carbon particles having weight percent between 20% and 35%, determined based on charging speed and lifespan of a battery including the electrode, coating the mixed graphite particles and hard carbon particles on a current collector, and rolling the coated graphite particles and hard carbon particles.

The mixing may be performed using at least one of ball milling, attrition milling, SPEX milling, impact milling, and rolling milling.

The mixing may be performed in at least one of argon (Ar) and nitrogen (N2) atmospheres.

The mixing may include mixing the graphite particles and a precursor of the hard carbon particles in water and then drying and sintering the mixture.

The hard carbon particles may have a size between 4 µm and 12 µm.

The hard carbon particles may each be shaped like at least one of a circular shape, a plate shape, and a linear shape.

The rolling may be performed in such a way that the graphite particles and the hard carbon particles have loading-level between 5 mg/cm² and 12 mg/cm².

The method may further include forming a coating layer on the graphite particles and the hard carbon particles.

Additional and/or other aspects and advantages of the disclosure will be set forth in part in the description which follows and, in part, will be obvious from the description, or may be learned by practice of the disclosure.

### Brief Description of Drawings

The above and/or other aspects of the present disclosure will be more apparent by describing certain exemplary embodiments of the present disclosure with reference to the accompanying drawings, in which:

FIGS. 1, 2 and 3 are diagrams illustrating structures of electrodes manufactured according to exemplary embodiments of the present disclosure;

FIG. 4 is a diagram for explanation of an operation of a lithium ion in an electrode according to an exemplary embodiment of the present disclosure;

FIG. 5 is a graph showing change in a maximum charge rate according to a ratio of hard carbon of a battery including an electrode manufactured according to an exemplary embodiment of the present disclosure;

FIG. 6 is a graph showing change in charging time based on a ratio of hard carbon of a battery including an electrode manufactured according to an exemplary embodiment of the present disclosure;

FIGS. 7 and 8 are graphs for comparison of simulation and experiment results of battery capacity according to a charge rate of a battery including an electrode manufactured according to an exemplary embodiment of the present disclosure;

FIG. 9 is a graph showing charging and discharging characteristics of a battery including an electrode manufactured according to an exemplary embodiment of the present disclosure;

FIG. 10 is a graph illustrating a result obtained by measuring a state of charge (SOC) of a battery including an electrode manufactured according to an exemplary embodiment of the present disclosure;

FIG. 11 is a graph for explanation of lifespan of a battery including an electrode manufactured according to an exemplary embodiment of the present disclosure; and

FIG. 12 is a flowchart for explanation of a method for manufacturing an electrode according to an exemplary embodiment of the present disclosure.

### Mode for the Invention

Certain exemplary embodiments of the present disclosure will now be described in greater detail with reference to the accompanying drawings. In the description of the present disclosure, certain detailed explanations of related art are omitted when it is deemed that they may unnecessarily obscure the essence of the disclosure. In addition, the present disclosure may be embodied in many different forms and may not limited to the embodiments described hereinafter, and the embodiments herein are rather introduced to provide easy and complete understanding of the scope of the present disclosure, according to appended claims.

In addition, when a certain part "includes" a certain component, this indicates that the part may further include another component instead of excluding another component unless there is no different disclosure. Elements in the following drawings may be schematically illustrated. Accordingly, the technical spirit of the present disclosure may not be limited to a relative size or interval illustrated in the drawings.

A battery typically includes an electrode (including a positive electrode and a negative electrode), an electrolyte, a separation layer, a current collector, and a case. At least one of the positive and negative electrodes constituting the electrode may be manufactured according to the following diverse exemplary embodiments of the present disclosure.

An electrode according to the diverse exemplary embodiments of the present disclosure may include a plurality of graphite particles that are arranged on a current collector so as to form a plurality of pores, and a plurality of hard carbon particles that are mixed with the graphite particles and having a weight percent determined based on charging speed and lifespan of a battery including the electrode.

The electrode according to the diverse exemplary embodiments of the present disclosure may be used in a negative electrode of a lithium secondary battery according to the diverse exemplary embodiments of the present disclosure. However, the diverse exemplary embodiments of the present disclosure are not limited thereto and thus the electrode may be used in any battery including a primary battery such as a manganese dry battery, an alkaline dry battery, a graphite fluorides lithium battery, a sulfur dioxide lithium battery, lithium-thionyl chloride cell, an zinc-air battery, and a thermoelectric battery, and a secondary battery such as a nickel?iron (Ni-Fe) secondary battery, a Sodium Sulfur (NaS) secondary battery, a lead acid battery, a nickel?cadmium (NiCd) secondary battery, and an nickel?metal hydride (Ni-MH) secondary battery as well as a battery using metal as a material of an electrode. In addition, the electrode may be used in a positive electrode as well as a negative electrode.

In addition, a battery using an electrode according to an exemplary embodiment of the present disclosure may be classified into a lithium ion battery, a lithium ion polymer battery, a lithium polymer battery, and so on according to types of a separation layer and an electrolyte.

In addition, the battery may be classified into a coin-type battery (a button-type battery), a sheet-type battery, a cylinder-type battery, a cylindrical battery, a rectangular battery, a pouch-type battery, and so on according to a shape of the battery and may be classified into a bulk-type battery and a thin film-type battery according to a size of the battery. Hereinafter, for convenience of description, the electrode is assumed to be used in a lithium ion battery.

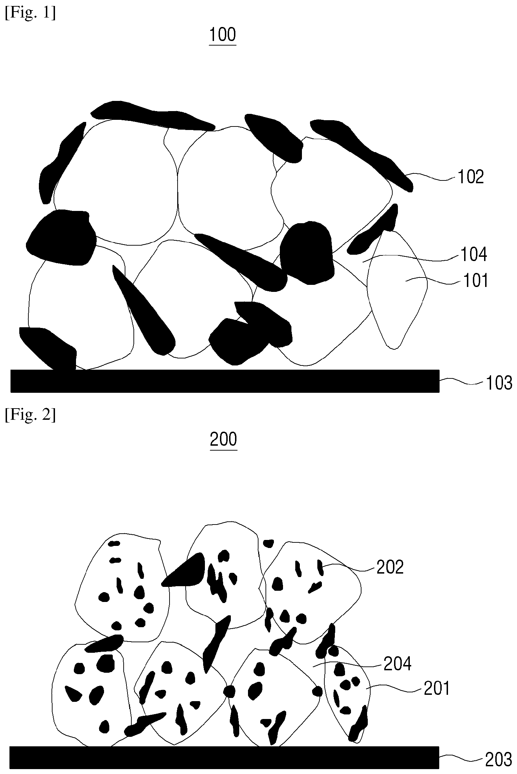

FIGS. 1, 2 and 3 are diagrams illustrating structures of electrodes 100, 200, and 300 manufactured according to exemplary embodiments of the present disclosure.

In particular, FIG. 1 is a diagram illustrating a structure of the electrode 100 including hard carbon with a large particle size according to an exemplary embodiment of the present disclosure.

Referring to FIG. 1, the electrode 100 manufactured according to an exemplary embodiment of the present disclosure may include a plurality of graphite particles 101 and a plurality of hard carbon particles 102. In this case, the graphite particles 101 may have energy density of about 372 mAh/g and affect enhancement in battery capacity. The hard carbon particles 102 may have lower energy density than the graphite particles 101 but may affect enhancement in charging speed of a battery having the electrode 100 according to an exemplary embodiment of the present disclosure due to high electric conductivity.

In detail, the electrode 100 may include the graphite particles 101 that are arranged on a current collector 103 so as to form a plurality of pores 104 and the hard carbon particles 102 mixed with the graphite particles 101. In detail, the hard carbon particles 102 may be mixed with the graphite particles 101 in the form of a chemical complex or complex. In this case, the complex may be formed in such a way that the hard carbon particles 102 are arranged in the pores 104 between the graphite particles 101. In this case, the hard carbon particles 102 may each have a size between 4 µm and 12µm.

In this case, the hard carbon particles 102 may each be shaped like at least one of a circular shape, a plate shape, and a linear shape.

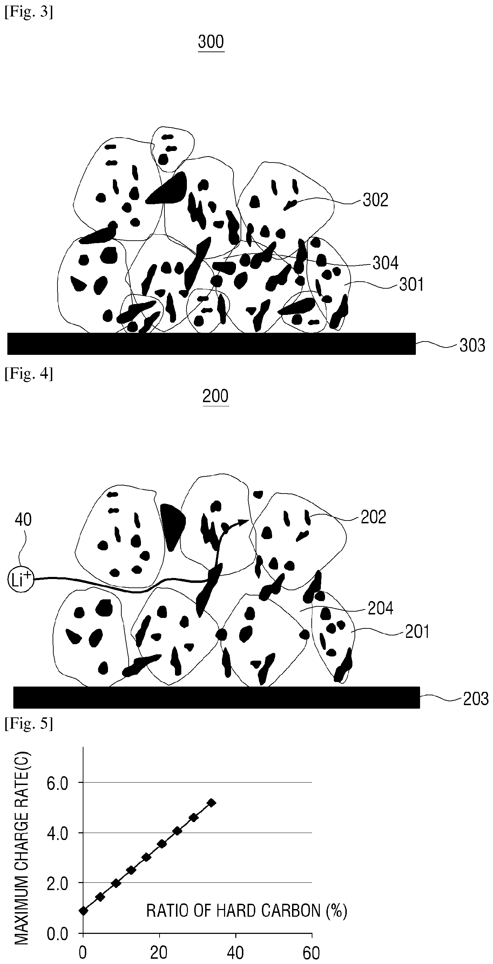

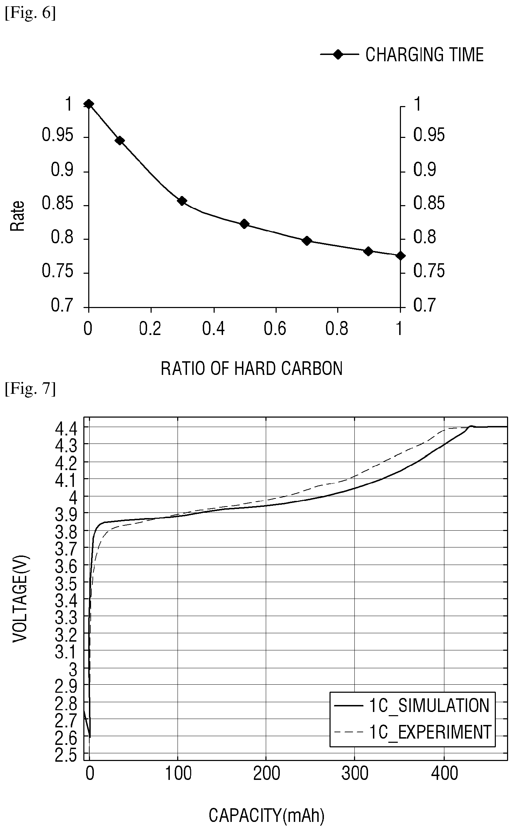

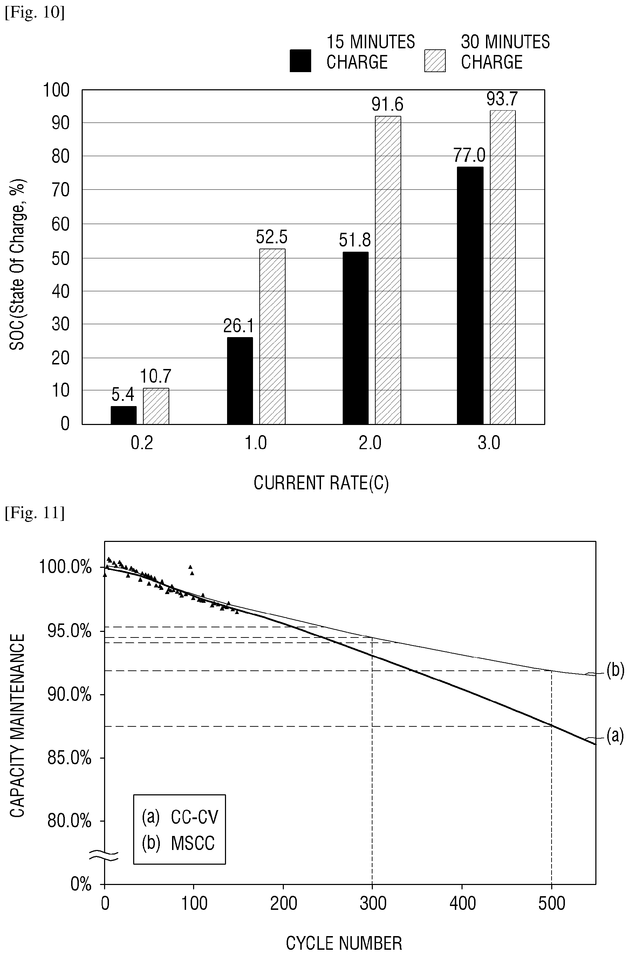

In this case, a weight percent of the hard carbon particles 102 may be determined based on the charging speed and lifespan of a battery having the electrode 100. For example, a weight percent of the hard carbon particles 102 may be between 20% and 40%, more particularly, between 20% and 35%. In this case, weight percent of the hard carbon particles 102 may be determined according to a maximum charge rate of a battery based on a ratio of hard carbon shown in FIG. 5 and Table I below, a charging time of a battery based on a ratio of hard carbon shown in FIG. 6, and lifespan of a battery based on a ratio of hard carbon shown in FIG. 11 and Tables II and III below.

In this case, hard carbon may be a carbon material that is formed by irregularly collecting small graphite crystals to result in low crystallinity, and that is difficult to be graphitized and to become a layer structure despite heat treatment at high temperature. In detail, the hard carbon may be a material that is obtained by carbonizing thermosetting resin such as phenolic resin, has a structure formed by irregularly stacking carbon layers, does not have a developed graphite structure, that is, a layer structure however a heat treatment temperature is increased, and generally has a crystalline size of several nanometers or less.

In this case, the current collector 103 may be metal foil used to manufacture a pole plate, and in particular, may be an element to manufacture a thin film pole plate. The current collector 103 may function as a path for transporting electrons from an external source so as to cause an electrochemical reaction in an active material or for receiving electrons from the active material and allowing the electrons to flow outside.

A lithium ion battery may mainly use an aluminum (Al) current collector for a positive electrode and a copper (Cu) current collector for a negative electrode. In general, the current collector may have a thickness of about 10 µm to 20 µm.

The exemplary embodiments of the present disclosure may not be limited to Al and Cu, and the electrode may be manufactured using group 1 element such as lithium (Li), sodium (Na), potassium (K), ruthenium (Ru), cesium (Cs), and francium (Fr), group 2 element such as beryllium (Be), magnesium (Mg), calcium (Ca), strontium (Sr), barium (Ba), and radium (Ra), and most metals such as lead (Pb), nickel (Ni), copper (Cu), aluminum (Al), titanium (Ti), steel use stainless (SUS), and iron (Fe)-based alloy.

Thus far, the case in which the current collector 103 has a foil form has been described for convenience of description. In other cases, the current collector 103 may be formed of a porous material. In such cases, the term 'porous' may refer to a state in which gaps are present on a surface, and for example, the current collector 103 may be formed of a porous material formed by physically processing a metal plate such as a copper (Cu) plate or a porous material formed by coating an electric conductor such as on aluminum (Al) oxide.

The electrode 100 may further include transition metal (not shown). In detail, the transition metal may be included in the electrode 100 by being doped in the electrode 100. In this case, the transition metal may be present in the form of oxide on a surface of the electrode 100 and in the electrode 100. In this ca se, the transition metal may be any element corresponding to a transition metal of periodic table, such as aluminum (Al), titanium (Ti), vanadium (V), manganese (Mn), yttrium (Y), zirconium (Zr), molybdenum (Mo), scandium (Sc), chromium (Cr), cobalt (Co), nickel (Ni), zinc (Zn), niobium (Nb), ruthenium (Ru), and palladium (Pd). In this case, the transition metal may be included in the electrode 100 with a weight percent between 0.5% and 1%. In this case, the transition metal included in the electrode 100 may prevent a side reaction to be caused on an electrode surface during rapid charging of a battery to extend lifespan.

FIG. 2 is a diagram illustrating a structure of an electrode 200 including hard carbon with a small particle size according to an exemplary embodiment of the present disclosure.

Referring to FIG. 2, the electrode 200 manufactured according to an exemplary embodiment of the present disclosure may include a plurality of graphite particles 201 and a plurality of hard carbon particles 202. In detail, the electrode 200 may include the graphite particles 201 that are arranged on a current collector 203 so as to form a plurality of pores 204 and the hard carbon particles 202 mixed with the graphite particles 201. In detail, the hard carbon particles 202 may be mixed with the graphite particles 201 by being coated on a surface of the graphite particles 201 in the form of hard carbon particles 202. In this case, the hard carbon particles 202 may have a size between 4 µm to 12 µm.

In this case, the hard carbon particles 202 may each be shaped like at least one of a circular shape, a plate shape, and a linear shape.

In this case, weight percent of the hard carbon particles 202 may be determined based on the charging speed and lifespan of a battery including the electrode 200. For example, weight percent of the hard carbon particles 202 may be between 20% and 40%, more particularly, between 20% and 35%. In this case, weight percent of the hard carbon particles 202 may be determined according to a maximum charge rate of a battery based on a ratio of hard carbon shown in FIG. 5 and Table I below, charging time of a battery based on a ratio of hard carbon shown in FIG. 6, and lifespan of a battery based on a ratio of hard carbon shown in FIG. 11 and Tables II and III below.

Thus far, the case in which the current collector 203 of the electrode 200 has a foil form has been described for convenience of description, but in reality, the current collector 203 may be formed of a porous material. The electrode 200 may further include a transition metal (not shown), which may be the same as in the description with reference to FIG. 1.

FIG. 3 is a diagram illustrating a structure of an electrode 300 manufactured to a high loading-level according to an exemplary embodiment of the present disclosure.

Referring to FIG. 3, the electrode 300 manufactured according to an exemplary embodiment of the present disclosure may include a plurality of graphite particles 301 and a plurality of hard carbon particles 302. In detail, the electrode 300 may include the graphite particles 301 that are arranged on a current collector 303 so as to form a plurality of pores 304 and the hard carbon particles 302 mixed with the graphite particles 301.

In detail, the hard carbon particles 302 may be mixed with the graphite particles 301 in at least one form of a complex form and a form obtained by coating the hard carbon particles 302 on a surface of the graphite particles 301 in the form of particles. In this case, the complex may be formed in such a way that the hard carbon particles 302 are arranged in the pores 304 between the graphite particles 301. In this case, the hard carbon particles 302 may each have a size between 4 µm and 12 µm. The hard carbon particles 302 may each be shaped like at least one of a circular shape, a plate shape, and a linear shape.

In this case, the electrode 300 may be manufactured in such a way that the mixed hard carbon particles 302 and graphite particles 301 have high loading-level.

In this case, loading-level may be defined as an amount of electrode materials per unit area. In detail, the loading-level may be manufactured by dividing an amount of an electrode material by an area. The loading-level may affect charging speed and lifespan of a battery including the electrode 300. Influence of the loading-level on an electrode will be described in detail with reference to FIG. 4. In this case, the loading-level of the electrode 300 may be between about 5 mg/cm² and about 12 mg/cm², and more particularly, the loading-level of the electrode 300 may be about 7.5 mg/cm².

Weight percent of the hard carbon particles 302 may be determined based on the charging speed and lifespan of a battery including the electrode 300. For example, weight percent of the hard carbon particles 302 may be between 20% and 40%, more particularly, between 20% and 35%. In this case, weight percent of the hard carbon particles 302 may be determined according to a maximum charge rate of a battery based on a ratio of hard carbon shown in FIG. 5 and Table I below, charging time of a battery based on a ratio of hard carbon shown in FIG. 6, and lifespan of a battery based on a ratio of hard carbon shown in FIG. 11 and Tables II and III below.

Thus far, the case in which the current collector 303 of the electrode 300 has a foil form has been described for convenience of description, but in reality, the current collector 303 may be formed of a porous material. The electrode 300 may further include transition metal (not shown), which may be the same as in the description with reference to FIG. 1.

Thus far, the case in which an electrode according to an exemplary embodiment of the present disclosure includes a plurality of graphite particles and a plurality of hard carbon particles has been described with reference to FIGS. 1 to 3, but in reality, an electrode may further include a coating layer (not shown) disposed on a plurality of graphite particles and a plurality of hard carbon particles which are arranged on a current collector.

In this case, the coating layer (not shown) may be disposed on an electrode (e.g., the electrode 300) so as to prevent the electrode from being separated on the current collector and being diffused to an electrolyte. In this case, the coating layer (not shown) may be formed of any conductive or nonconductive material that does not react with an electrolyte irrespective of any reaction in a battery. In detail, the coating layer (not shown) may be formed of metal such as gold (Au), silver (Ag), titanium (Ti), cobalt (Co), nickel (Ni), chromium (Cr), tantalum (Ta), tungsten (W), and SUS, metallic oxide or nitride such as silicon carbide (SiC), silicon nitride (SiN), zirconia, alumina, and tungsten carbide, ceramic such as oxide or nitride of alloy, and a high molecular material such as polyvinylidene difluoride (PVDF), polyamide imide (PAI), carboxymethyl cellulose (CMC), styrene butadiene rubber (SBR), and manicure.

Although not shown, a battery according to an exemplary embodiment of the present disclosure may include a current collector, a positive electrode, an electrolyte, and a negative electrode. In this case, at least one of the positive electrode and the negative electrode may include a plurality of graphite particles that are arranged on the current collector so as to form a plurality of pores and a plurality of hard carbon particles mixed with the graphite particles.

In this case, weight percent of the hard carbon particles may be determined based on the charging speed and lifespan of a battery. In detail, weight percent of the hard carbon particles may be between about 20% and about 40%, more particularly, between about 20% and about 35%. In this case, weight percent of the hard carbon particles 102 may be determined according to a maximum charge rate of a battery based on a ratio of hard carbon shown in FIG. 5 and Table I below, charging time of a battery based on a ratio of hard carbon shown in FIG. 6, and lifespan of a battery based on a ratio of hard carbon shown in FIG. 11 and Tables II and III below.

When one of the positive electrode and the negative electrode of the battery according to an exemplary embodiment of the present disclosure includes a plurality of graphite particles and a plurality of hard carbon particles, the other electrode may have at least one of a layer structure, a spinel structure, and an olivine structure. In detail, when the electrode according to an exemplary embodiment of the present disclosure is applied to a negative electrode, a positive electrode as an opposite electrode may have at least one of a layer structure, a spinel structure, and an olivine structure.

In this case, a layer structure may be formed by overlapping surfaces, on which atoms are strongly bonded to each other according to covalent bond or the like and densely arranged, in parallel according to weak bonding force such as van der Waals force. For example, there may be the layer structure in graphite, cadmium iodine, and the like. This structure easily peels in the form of a thin section and diffuse scattering of X-rays is this structure is frequently observed due to asymmetrical stack of layers. In addition, other atoms or molecules may be inserted between layers to form an intercalation compound or reactivity such as catalysis may be exhibited between the layers.

In this case, a spinel structure may be a structural name of a compound, which is originated from spinel as a mineral term of MgAl2O4, and refers to one of a crystalline structure of a compound denoted by AB2X4. In detail, A may be Mg, Fe, Zn, Mn, Co, or the like, B may be Al, Fe, Cr, or the like, and X may be O, S, F, or the like. This structure may be formed by arranging X with almost cubic close packing, inserting B into a gap of an octahedral shape, and inserting A into a gap of a tetrahedral shape. In addition, B(AB)O4 by reversing half of A and B is referred to as inverse spinel.

In this case, an olivine structure may be a term indicating a crystalline structure of lithium iron phosphate (LiFePO4). The olivine structure has excellent stability even in an overheat and overcharging state due to high chemical stability, has high energy density, and is manufactured with low costs. In addition, maintenance and ambient temperature management of the olivine structure are not required so as to reduce a maintenance fee and to result in very high space utilization efficiency.

FIG. 4 is a diagram for explanation of an operation of a lithium ion 40 in the electrode 200 manufactured according to an exemplary embodiment of the present disclosure.

Referring to FIG. 4, the lithium ion 40 functioning as an electrical conductor in the electrode 200 may be moved through the graphite particles 201 arranged on the current collector 203, the pores 204 generated between the graphite particles 201, and the hard carbon particles 202.

In detail, the lithium ion 40 may be primarily diffused through the hard carbon particles 202 and secondarily diffused through the graphite particles 201 during charging of a battery (not shown) including the electrode 200 according to an exemplary embodiment of the present disclosure. In more detail, the lithium ion 40 may be first moved through an electrolyte (not shown) during charging of a battery including the electrode 200. Then, the lithium ion 40 may be adsorbed onto the hard carbon particles 202 based on a Coulomb force and may be primarily diffused. In this case, the lithium ion 40 may be adsorbed onto a surface of the hard carbon particles 202 so as to increase a surface density of the lithium ion 40 and to enhance charging and discharging speed of a battery including the electrode 200.

In this case, the Coulomb force may refer to a force acting between two point charges, and the surface density may refer to an amount of a material per a unit area of the surface when the material is attributed on a surface of another material. Then, the lithium ion 40 may be moved to the graphite particles 201 through secondary diffusion so as to enhance energy density. That is, the hard carbon particles 202 may be added to the electrode 200 including the graphite particles 201 so as to enhance diffusing speed of an overall electrode.

Thus far, the case in which lithium ions are primarily diffused through only a plurality of hard carbon particles and then are secondarily diffused through a plurality of graphite particles has been described for convenience of description. In some cases, lithium ions may be primarily and simultaneously diffused through a plurality of graphite particles as well as a plurality of hard carbon particles.

Thus far, an operation of a lithium ion in an electrode during charging of a battery has been described for convenience of description. In some cases, charging and discharging of the battery may be repeatedly performed, and reaction may occur in an opposite order to a reaction order of battery charging during discharging of the battery. Charging and discharging speed and lifespan of a battery including the electrode 200 may be adjusted according to the type and amount of the hard carbon particles 202.

The pores 204 generated between the graphite particles 201 may be a factor for controlling charging and discharging speed of a battery including the electrode 200. This is because the lithium ion 40 is moved through an electrolyte (not shown) filled in the pores 204 before being adsorbed onto the hard carbon particles 202 and diffused. In detail, the pores 204 may be controlled through loading-level during manufacture of the electrode 200. For example, when an electrode includes the pores 204 due to high loading-level, it may be challenging to move lithium ions to reduce charging speed and to increase a voltage to gradually degrade an electrode, thereby reducing lifespan of a battery including the electrode.

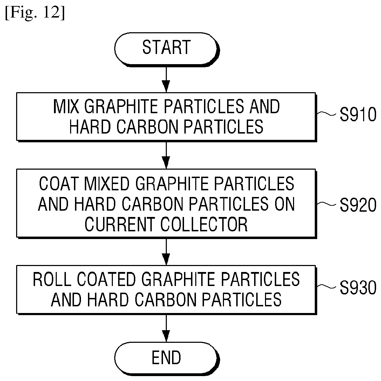

Control of loading-level of an electrode is performed in a rolling operation of manufacturing operations of the electrode, which will be described with reference to FIG. 12.

FIG. 5 is a graph showing change in a maximum charge rate according to a ratio of hard carbon of a battery including an electrode manufactured according to an exemplary embodiment of the present disclosure.

As seen from FIG. 5, the battery including the electrode manufactured according to an exemplary embodiment of the present disclosure has a maximum charge rate that is increased with an increase in a ratio of hard carbon in the electrode. More detailed numerical values will be described in detail with reference to Table I below.

**[Table 1]**

| **Ratio of hard carbon (%)** | **Maximum charge rate (C)** |
|---|---|
| 0 | 1 |
| 5 | 1.5 |
| 10 | 2 |
| 15 | 2.5 |
| 20 | 3 |
| 25 | 3.5 |
| 30 | 4 |
| 35 | 4.5 |
| 40 | 5 |

As seen from Table I above, a maximum charge rate (C) of a battery is increased with increase in a ratio of hard carbon.

In this case, the charge rate may be a value obtained by dividing charging or discharging current by a rated capacity value of a battery. For example, when the charge rate is 2 C, a current corresponding to about twice a rated capacity value of a battery is applied to an electrode. In this case, the maximum charge rate may refer to a maximum current amount that an electrode receives with respect to the rated capacity of the battery. In this case, the maximum current amount that the electrode receives may refer to a current amount at which an electrode is not degraded even if the entire amount of current is applied to the electrode at the same time.

As shown in Table I above, as a ratio of hard carbon included in an electrode is increased, a charge rate of a battery is increased, and thus a large amount of current may be applied to the electrode during charging of the battery at one time. Accordingly, charging speed of the battery may be enhanced. However, when a large amount of current is applied to an electrode at one time, the electrode may be degraded, thereby reducing lifespan of the battery. However, a maximum charge rate of a battery including an electrode manufactured according to an exemplary embodiment of the present disclosure is high, and the battery is barely degraded even if a large amount of current is applied to the electrode at one time, thereby enhancing lifespan of the battery. The lifespan of the battery including the electrode according to an exemplary embodiment of the present disclosure will be described in detail with reference to FIG. 11.

FIG. 6 is a graph showing change in charging time based on a ratio of hard carbon of a battery including an electrode manufactured according to an exemplary embodiment of the present disclosure. In detail, the graph shows a rate between a charging time of a battery including an electrode that does not include hard carbon and a charging time of a battery according to an amount of hard carbon included in an electrode.

As seen from FIG. 6, as a ratio of hard carbon included in the electrode is increased, charging time of the battery is reduced. This is because a charge rate of the battery is increased according to hard carbon included in the electrode. In detail, as seen from FIG. 5 and Table I above, a maximum charge rate of a battery is increased due to hard carbon included in the electrode so as to reduce a charging time of the battery. That is, a maximum current amount that an electrode endures may be increased due to hard carbon added to the electrode and thus a large amount of current may be applied at one time, thereby reducing charging time of the battery.

Thus far, although the case in which charging time of a battery is reduced with an increase in a current amount applied to an electrode based on a maximum charge rate of the electrode due to hard carbon added to the electrode has been described, moving speed of lithium ion in the electrode may be increased by adding hard carbon with higher ion conductivity than graphite to the electrode even if the same current is applied to the electrode such that charging time of the battery is reduced with an increase in a ratio of hard carbon added to the electrode.

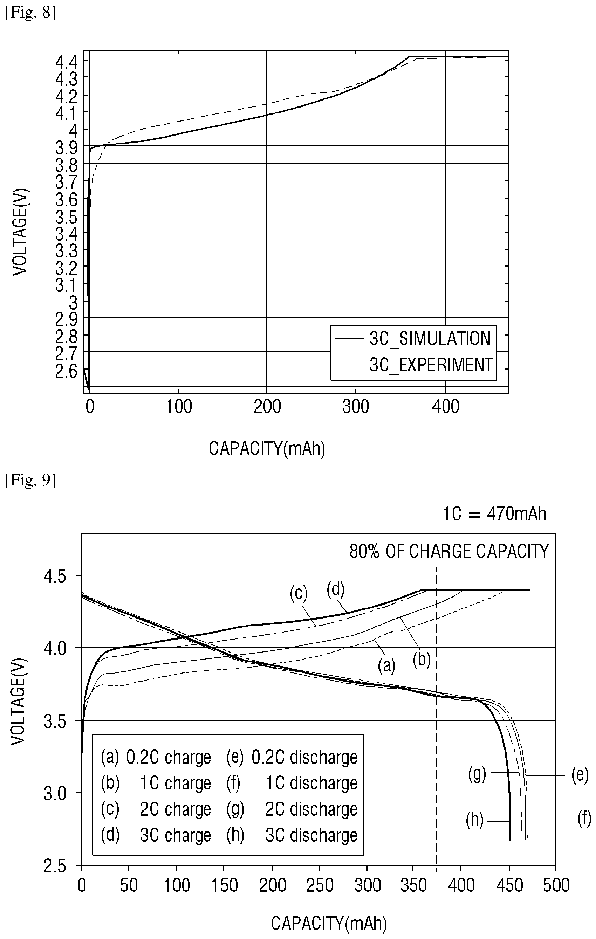

FIGS. 7 and 8 are graphs for comparison of simulation and experiment results of battery capacity according to a charge rate of a battery including an electrode manufactured according to an exemplary embodiment of the present disclosure. In detail, FIG. 7 is a graph showing battery capacity when the battery including the electrode included in a battery with rated capacity of 420 mAh is charged with a charge rate of 1 C according to an exemplary embodiment of the present disclosure, and FIG. 8 is a graph showing battery capacity when a battery including the electrode used in FIG. 7 is charged with a charge rate of 3 C.

As seen from FIG. 7, when a battery including an electrode with rated capacity of 420 mAh according to an exemplary embodiment of the present disclosure is charged with 1 C, the battery is maintained in capacity of about 400 mAh as the experimental result.

As seen from FIG. 8, when a battery including an electrode according to an exemplary embodiment of the present disclosure is charged with a high charge rate of 3 C, battery capacity is also maintained in about 85% of initial capacity. For example, when a battery including an electrode with rated capacity of 420 mAh according to an exemplary embodiment of the present disclosure is charged with 3 C, any battery capacity may be about 350 mAh as the simulation and experimental results. When a battery including a typical electrode is charged under the same condition, battery capacity is in a level of about 10% to 25%, and accordingly, it may be seen that charging speed of an electrode may be increased by several times that of the typical electrode by adding hard carbon particles and adjusting loading-level.

FIG. 9 is a graph showing charging and discharging characteristics of a battery including an electrode manufactured according to an exemplary embodiment of the present disclosure. In detail, FIG. 9 shows result values of a battery including a positive electrode of lithium cobalt oxide (LCO) of a high voltage of 4.4 C and a negative electrode formed by mixing hard carbon particles with graphite particles.

In detail, line (a) and line (e) are graphs showing battery capacity when a battery including an electrode with rated capacity of 470 mAh according to an exemplary embodiment of the present disclosure is charged and discharged with a charge rate of 0.2 C, line (b) and line (f) are graphs showing battery capacity when the same battery is charged and discharged with a charge rate of 1 C, line (c) and line (g) are graphs showing battery capacity when the same battery is charged and discharged with a charge rate of 2 C, and line (d) and line (h) are graphs showing battery capacity when the same battery is charged and discharged with a charge rate of 3 C.

As seen from FIG. 9, rapid charge up to 80% or more of a state of charge (SOC) is achieved irrespective of a type of a material of a positive electrode, and ultra charge and discharge up to about 90% for about 30 minutes is achieved. For example, as seen from line (d), when a battery having rated capacity of 470 mAh and including an electrode according to an exemplary embodiment of the present disclosure is charged with 3 C, the battery is charged up to about 80% of battery capacity. An SOC based on a charge rate of a battery including an electrode according to an exemplary embodiment of the present disclosure will be described with reference to FIG. 10.

FIG. 10 is a graph illustrating a result obtained by measuring an SOC of a battery including an electrode manufactured according to an exemplary embodiment of the present disclosure. In detail, FIG. 10 is a graph illustrating a result obtained by measuring a SOC of a battery according to charging time, and in this case, the battery includes a positive electrode of LCO of a high voltage of 4.4 C and an electrode manufactured according to an exemplary embodiment of the present disclosure as a negative electrode. For example, the electrode manufactured according to an exemplary embodiment of the present disclosure may have about 30% of a weight ratio of hard carbon particles with respect to graphite particles.

In this case, a state of charge (SOC) may refer to a ratio of charge capacity to rated capacity of a battery and have a unit of percent (%). For example, when a battery is completely discharged, a SOC may be 0%, and when the battery is completely charged, a SOC may be 100%.

As seen from FIG. 10, when a battery including an electrode according to an exemplary embodiment of the present disclosure is charged with a charge rate of 3 C, a SOC has a level of about 80% (±5%) for charge of 15 minutes and a level of about 95%(±2%) for charge of 30 minutes. That is, it may be seen that the battery including the electrode according to an exemplary embodiment of the present disclosure is capable of being charged at very high speed.

FIG. 11 is a graph for explanation of lifespan of a battery including an electrode manufactured according to an exemplary embodiment of the present disclosure. In detail, FIG. 11 is a graph for explanation of change in lifespan of a battery according to a charging method when a battery including an electrode having 30% of hard carbon particles is charged with a charge rate of 2.5 C.

Referring to FIG. 11, line (a) is a graph illustrating lifespan of a battery including an electrode according to an exemplary embodiment of the present disclosure when the battery is charged using a constant current-constant voltage (CC-CV) charging method.

In this case, the CC-CV charging may be generally used, and in detail, may be a method for performing charging with constant current until a battery reaches a predetermined voltage and then performing charging with gradually reduced current when the battery reaches the predetermined voltage.

Line (b) is a graph illustrating lifespan of a battery including an electrode according to an exemplary embodiment of the present disclosure when the battery is charged using a multi step constant current (MSCC) charging method.

In this case, the MSCC charging method refers to a charging method with current that is gradually changed. In detail, the MSCC charging method may be a method for performing charging with high current when charging is begun and then gradually performing charging with low current. The MSCC charging method is different from the CC-CV charging method for performing charging with constant current in that charging is performed with current that is gradually changed and charging is begun with high current. In this case, when charging is performed using the MSCC charging method, charging speed may be enhanced and lifespan of a battery may be enhanced.

It may be seen that, when a battery including an electrode manufactured according to an exemplary embodiment of the present disclosure is charged using the MSCC charging method, line (b), lifespan of the battery is increased by about 1.5 times compared with the case in which the battery is charged using the CC-CV charging method, line (a). For example, as shown in FIG. 11, when a battery is charged using the CC-CV charging method, line (a), about 400 charge discharge cycles proceed, but when the same battery is charged using the MSCC charging method, line (b), it may be expected that about 600 (not shown) charge discharge cycles proceed up to reduction in about 10% of capacity. Accordingly, when the battery including the electrode according to an exemplary embodiment of the present disclosure is charged using the MSCC charging method, the battery may have more enhanced lifespan characteristics.

Thus far, although lifespan of a battery according to a charging method has been described and illustrated, lifespan of a battery according to a ratio of hard carbon particles and a charge rate will be described with reference to Tables II and III below.

**[Table 2]**

| **Ratio of hard carbon (**%**)** | **Lifespan** of battery (based on 2.5 C) |
|---|---|
| 0 | 300 |
| 5 | 350 |
| 10 | 400 |
| 15 | 500 |
| 20 | 600 |
| 25 | 700 |
| 30 | 800 |
| 35 | 900 |
| 40 | 1000 |

Table II above shows lifespan of a battery including an electrode according to an exemplary embodiment of the present disclosure based on a ratio of hard carbon included in the electrode when a charge discharge cycle is repeated on the battery with a charge rate of 2.5 C. In this case, lifespan of a battery may be assumed as the number of charge discharge cycles repeated until battery capacity is reduced to a level of about 80% or less. In this case, the battery may be charged using the CC-CV charging method.

As seen from Table II above, the lifespan of the battery is increased as a ratio of hard carbon included in the electrode is increased. This is because a maximum charge rate of the battery including the electrode is also increased as a ratio of hard carbon included in the electrode is increased, as shown in FIG. 5 and Table I above. In other words, in the case of an electrode with a high ratio of hard carbon, a maximum current amount that the electrode endures is increased, and thus degradation of the electrode less occurs when a constant current amount (2.5 C) is repeatedly applied, thereby enhancing lifespan of a battery including the electrode with a high ratio of hard carbon.

**[Table 3]**

| **Charge rate (C, based on 30% of hard carbon)** | **Lifespan** of battery |
|---|---|
| 1 | 1000 |
| 1.5 | 1000 |
| 2 | 900 |
| 2.5 | 800 |
| 3 | 700 |
| 3.5 | 600 |
| 4 | 500 |
| 4.5 | 400 |
| 5 | 300 |

Table III above shows the lifespan of a battery including an electrode having a predetermined ratio (30%) of hard carbon when a charge discharge cycle is performed on the electrode with different charge rates. In this case, the lifespan of a battery may be defined as the number of charge discharge cycles repeated until battery capacity is reduced to a level of about 80% or less. In this case, the battery may be charged using the CC-CV charging method.

As seen from Table III above, the lifespan of the battery is reduced as a charge rate is increased, that is, a current amount applied to the electrode during charging is increased. This is because the electrode is degraded as the current amount applied to the electrode is increased. However, it may be seen that, although lifespan of a battery is reduced as a charge rate is increased, about 700 charge discharge cycles proceed up to reduction in about 20% of capacity even if an electrode including 30% of hard carbon is charged with a high charge rate of 3 C.

Referring back to Table II above, although charge discharge cycles proceed on a battery including a typical electrode (0% of hard carbon) at a lower charge rate of 2.5 C than 3C, when just about 300 charge discharge cycles proceed, about 20% of capacity is reduced and lifespan of the battery is reached. Accordingly, the exemplary embodiments of the present disclosure may provide a battery with more enhanced lifespan characteristics compared with an electrode including a typical electrode.

An electrode for manufacturing an electrode with desired charging speed, capacity, and lifespan may be designed with reference to a maximum charge rate and change in lifespan of the battery according to a ratio of hard carbon, and change in lifespan of the battery according to a charge rate during charging of the battery.

FIG. 12 is a flowchart for explanation of a method for manufacturing an electrode according to an exemplary embodiment of the present disclosure.

Referring to FIG. 12, first, graphite particles and hard carbon particles are mixed at block S910. In this case, the graphite particle and the hard carbon particles may be mixed using any one of a solid-state reaction method and a liquid phase reaction method.

In detail, in the solid-state reaction method, hard carbon particles and graphite particles in a solid state may be mixed via milling. In this case, a ratio of the mixed hard carbon particles and graphite particles may be 3:7 on a weight basis. In this case, the hard carbon particles and the graphite particle may be mixed using at least one of ball milling, attrition milling, SPEX milling, impact milling, and rolling milling.

In this case, milling may be a process for pulverizing a material. In detail, the ball milling may be a method for pulverizing a target material using iron beads by putting the target material together with the iron beads in a cylinder and spinning the cylinder. The ball milling method may be mainly used to pulverize minerals.

The attrition milling may be a milling method using a pin type impeller, may excellent pulverization force due to high shearing force and impact energy that are applied to a material, and may be appropriate to a primary or secondary pulverizer for a material with a relatively high initial particle size so as to be expected to have uniform particle size distribution.

The SPEX milling may be a three-dimensional (3D) mixing method unlike a general ball milling and thus may be a power synthesizing method that is expected to have a sufficient effective for a short time period than the ball milling.

The impact milling may be a method for reducing a particle size of a pulverization target using physical impulsive force.

In this case, a size of a hard carbon particle may be adjusted according to a milling degree, i.e., milling time. For example, based on the attrition milling, milling may proceed at speed of about 600 rpm for about 3 hours. Specifically, when milling proceeds at speed of about 600 rpm for about 1 hour, hard carbon particles having a diameter between 4 µm and 12 µm, which is most appropriate to an electrode according to an exemplary embodiment of the present disclosure, may be obtained.

In this case, milling may be performed in an atmosphere of inert gas. In detail, the milling may be performed in an atmosphere of argon (Ar) and nitrogen (N2) gas except for oxygen (O2). This is because, when the milling may be performed in an atmosphere of oxygen, oxygen gas and graphite particles react with each other to generate graphite oxide, thereby degrading the characteristics of the electrode.

The liquid phase reaction method may be a method for mixing a precursor of hard carbon particles and graphite particles in water. In this case, the precursor of hard carbon particles may be a pre-stage material for lastly forming hard carbon. In detail, the precursor of hard carbon particles may any organic and inorganic materials including carbon. For example, the precursor of hard carbon particles may be glucose including carbon.

Then, water may be removed via a drying process and then a mixture of the precursor of hard carbon particles and the graphite particles may be sintered to obtain a composite of the hard carbon particles and the graphite particles or a mixture formed by coating the hard carbon particles on the graphite particles. In detail, in the sintering process, the precursor of hard carbon particles may be hydrothermally synthesized to generate hard carbon. In this case, sintering may be performed at a temperature between 1000 °C and 1400 °C.

Then, the mixed graphite particles and hard carbon particles may be coated on a current collector at block S920. In detail, a conductor, a binder, and the like may be further mixed to the mixed graphite particles and hard carbon particles to prepare slurry and then the slurry may be coated on the current collector.

In this case, the conductor may form electronic conduction channel in an electrode to enhance electronic conductivity, and examples of the conductor may include graphite such as natural graphite and artificial graphite, carbon blacks such as Super-P, carbon black, acetylene black, Ketjen black, channel black, furnace black, lamp black, and thermal black, conductive fibers such as carbon fiber and metal fiber, metallic powder such as fluorocarbon, aluminum, and nickel powder, conductive whiskers such as zinc oxide and potassium titanate, conductive metallic oxide such as titanium oxide, and a conductive material such as a polyphenylene derivative. A currently widely used conductor may be carbon blacks.

In this case, the binder may bond the mixed graphite particles and hard carbon particles and fix the bonded material to the current collector. A binder material may be basically an insulator and may maintain a structure of an electrode. Examples of the binder may include various polymeric materials such as polyacrylonitrile (PAN), polyamide-imide (PAI), polyvinylidene difluoride (PVDF), polyvinyl alcohol, carboxymethyl cellulose (CMC), starch, hydroxypropylcellulose, regenerated cellulose, polyvinyl pyrrolidone, tetrafluoroethylene, polyethylene, polypropylene, ethylene propylene diene terpolymer (EPDM), sulfonated EPDM, styrene-butadiene rubber (SBR), and fluorocarbon rubber, and polyvinylidene difluoride (PVDF) is a most universal binder material. Recently, styrene-butadiene rubber (SBR) has also been used as a binder of a negative electrode.

Thus far, the case in which the mixed graphite particles and hard carbon particles are manufactured in the form of slurry and are coated on a current collector has been described for convenience of description, but in reality, physical vapor deposition (PVD) such as sputtering, chemical vapor deposition (CVD), and a coating method using a spray may be used. In this case, the current collector may be formed of a porous material with a honeycomb structure. In detail, the current collector may be formed of a porous material with a honeycomb structure manufactured via electroplating.

Then, the coated graphite particles and hard carbon particles are rolled at block S930. In this case, the rolling may be a method for passing a material between two rotating rolls to be processed as a plate, a pole, a pipe, a section member, or the like. In this case, the electrode may control loading-level according to a rolling degree. Accordingly, charging speed and lifespan of the electrode may be controlled.

Although not illustrated, a method for manufacturing an electrode according to an exemplary embodiment of the present disclosure may further include dying the coated graphite particles and hard carbon particles before being rolled. In detail, the electrode may be dried at a temperature of 250 °C or less ranging from 2 hours to 72 hours. In this case, the electrode may be dried in a weak vacuum state.

Although not illustrated, the method for manufacturing an electrode according to an exemplary embodiment of the present disclosure may further include rolling the coated graphite particles and hard carbon particles and then forming a coating layer on the rolled graphite particles and hard carbon particles. In detail, the coating layer may use any conductive and nonconductive materials that do not react with an electrolyte irrespective of any reaction in a battery. Accordingly, the electrode may be prevented from being separated from the current collector and being diffused to the electrolyte, and thus a battery with enhanced lifespan may be provided.

According to the above diverse exemplary embodiments of the present disclosure, an electrode with enhanced charging speed, capacity, and lifespan may be provided while using existing equipment without changes.

The foregoing exemplary embodiments and advantages are merely exemplary and are not to be construed as limiting the present disclosure. The present teaching can be readily applied to other types of apparatuses. Also, the description of the exemplary embodiments of the present disclosure is intended to be illustrative, and not to limit the scope of the claims, and many alternatives, modifications, and variations will be apparent to those skilled in the art.

## Claims

1. An electrode comprising:
a plurality of graphite particles arranged on a current collector so as to have a plurality of pores; and
a plurality of hard carbon particles arranged in the pores between the graphite particles, said graphite particles being larger in size than hard carbon particles, which have a size between 4 µm and 12 µm, and
wherein the weight percent of the hard carbon particles is between 20% and 35% based on a total weight of graphene and hard carbon, and wherein the graphite particles and the hard carbon particles have a loading-level between 5 mg/cm² and 12 mg/cm².

2. The electrode as claimed in claim 1, further comprising a transition metal mixed with the graphite particles and the hard carbon particles,
wherein the transition metal has a weight percent between 0.5% and 1% based on a total weight of graphene and hard carbon.

3. The electrode as claimed in claim 1, wherein the hard carbon particles are each shaped like at least one of a circular shape, a plate shape, and a linear shape.

4. The electrode as claimed in claim 1, further comprising a coating layer disposed on the graphite particles and the hard carbon particles.

5. A battery comprising:
a current collector;
a positive electrode;
an electrolyte; and
a negative electrode,
wherein at least one of the positive electrode and the negative electrode is an electrode according to claim 1.

6. The battery as claimed in claim 5, wherein one of the positive electrode and the negative electrode is an electrode according to claim 1, and
wherein the other of the positive electrode and the negative electrode has at least one of a layer structure, a spinel structure, and an olivine structure.

7. A method for manufacturing an electrode, the method comprising:
mixing a plurality of graphite particles with a plurality of hard carbon particles having a weight percent between 20% and 35% based on a total weight of graphite and hard carbon, said graphite particles being larger in size than hard carbon particles, which have a size between 4 µm and 12 µm;
coating the mixed graphite particles and hard carbon particles on a current collector so that the hard carbon particles are arranged in the pores between the graphite particles; and
rolling the coated graphite particles and hard carbon particles, wherein the graphite particles and the hard carbon particles have a loading-level between 5 mg/cm² and 12 mg/cm².

8. The method as claimed in claim 7, wherein the mixing comprises mixing the graphite particles and a precursor of the hard carbon particles in water and then drying and sintering the mixture.

9. The method as claimed in claim 7, further comprising forming a coating layer on the graphite particles and the hard carbon particles.

## Patentansprüche

1. Elektrode, umfassend:
eine Vielzahl von Grafitpartikeln, die auf einem Stromabnehmer derart angeordnet sind, dass sie eine Vielzahl von Poren aufweisen;
und eine Vielzahl von Hartkohlenstoffpartikeln, die in den Poren zwischen den Grafitpartikeln angeordnet sind, wobei die Grafitpartikel größerer sind als Hartkohlenstoffpartikel, die eine Größe zwischen 4 µm und 12 µm aufweisen, und wobei der Gewichtsanteil der Hartkohlenstoffpartikel zwischen 20 % und 35 % auf Grundlage des Gesamtgewichts von Grafit und Hartkohlenstoff liegt, und wobei die Grafitpartikel und die Hartkohlenstoffpartikel ein Beladungsniveau zwischen 5 mg/cm² und 12 mg/cm² aufweisen.

2. Elektrode nach Anspruch 1, ferner umfassend ein Übergangsmetall, das mit den Grafitpartikeln und den Hartkohlenstoffpartikeln vermischt ist, wobei das Übergangsmetall einen Gewichtsanteil zwischen 0,5 % und 1 % auf Grundlage des Gesamtgewichts von Grafit und Hartkohlenstoff aufweist.

3. Elektrode nach Anspruch 1, wobei die Hartkohlenstoffpartikel jeweils wie mindestens eine von einer Kreisform, einer Plattenform und einer linearen Form geformt sind.

4. Elektrode nach Anspruch 1, ferner umfassend eine Beschichtungsschicht, die auf den Grafitpartikeln und den Hartkohlenstoffpartikeln angeordnet ist.

5. Batterie, umfassend:
einen Stromabnehmer;
eine positive Elektrode; ein Elektrolyt;
und eine negative Elektrode,
wobei mindestens eine von der positiven Elektrode und der negativen Elektrode eine Elektrode nach Anspruch 1 ist.

6. Batterie nach Anspruch 5, wobei eine von der positiven Elektrode und der negativen Elektrode eine Elektrode nach Anspruch 1 ist, und wobei die andere von der positiven Elektrode und der negativen Elektrode mindestens eine von einer Schichtstruktur, einer Spinellstruktur und einer Olivinstruktur aufweist.

7. Verfahren zum Herstellen einer Elektrode, wobei das Verfahren Folgendes umfasst:
Mischen einer Vielzahl von Grafitpartikeln mit einer Vielzahl von Hartkohlenstoffpartikeln, die einen Gewichtsanteil zwischen 20 % und 35 % auf Grundlage eines Gesamtgewichts von Grafit und Hartkohlenstoff aufweisen, wobei die Grafitpartikel größer sind als Hartkohlenstoffpartikel, die eine Größe zwischen 4 µm und 12 µm aufweisen, Beschichten der gemischten Grafitpartikel und Hartkohlenstoffpartikel auf einen Stromabnehmer, sodass die Hartkohlenstoffpartikel in den Poren zwischen den Grafitpartikeln angeordnet sind;
und Walzen der beschichteten Grafitpartikel und Hartkohlenstoffpartikel, wobei die Grafitpartikel und die Hartkohlenstoffpartikel ein Beladungsniveau zwischen 5 mg/cm² und 12 mg/cm² aufweisen.

8. Verfahren nach Anspruch 7, wobei das Mischen Mischen der Grafitpartikel und einer Vorstufe der Hartkohlenstoffpartikel in Wasser und Trocknen und Sintern des Gemischs umfasst.

9. Verfahren Anspruch 7, ferner umfassend Bilden einer Beschichtungsschicht auf den Grafitpartikeln und den Hartkohlenstoffpartikeln.

## Revendications

1. Électrode comprenant :
une pluralité de particules de graphite agencées sur un collecteur de courant de façon à présenter une pluralité de pores ;
et une pluralité de particules de carbone dur agencées dans les pores entre les particules de graphite, lesdites particules de graphite possédant une taille supérieure à celle des particules de carbone dur, qui possèdent une taille comprise entre 4 µm et 12 µm, et ledit pourcentage en poids des particules de carbone dur étant compris entre 20 % et 35 % sur la base d'un poids total de graphite et de carbone dur, et lesdites particules de graphite et lesdites particules de carbone dur possédant un niveau de charge compris entre 5 mg/cm² et 12 mg/cm².

2. Electrode selon la revendication 1, comprenant en outre un métal de transition mélangé aux particules de graphite et aux particules de carbone dur, ledit métal de transition possédant un pourcentage en poids compris entre 0,5 % et 1 %, sur la base du poids total de graphite et de carbone dur.

3. Electrode selon la revendication 1, lesdites particules de carbone dur étant chacune façonnées sous au moins l'une d'une forme circulaire, d'une forme de plaque et d'une forme linéaire.

4. Electrode selon la revendication 1, comprenant en outre une couche de revêtement disposée sur les particules de graphite et les particules de carbone dur.

5. Batterie comprenant :
un collecteur de courant ;
une électrode positive ;
un électrolyte ;
et une électrode négative,
au moins l'une de l'électrode positive et de l'électrode négative étant une électrode selon la revendication 1.

6. Batterie selon la revendication 5, l'une de l'électrode négative et de l'électrode positive étant une électrode selon la revendication 1, et ladite autre de l'électrode positive et de l'électrode négative possédant au moins l'une d'une structure en couches, d'une structure de spinelle et d'une structure d'olivine.

7. Procédé permettant la fabrication d'une électrode, le procédé comprenant :
le mélange d'une pluralité de particules de graphite avec une pluralité de particules de carbone dur possédant un pourcentage en poids compris entre 20 % et 35 % sur la base d'un poids total de graphite et de carbone dur, lesdites particules de graphite possédant une taille supérieure à celle des particules de carbone dur, qui possèdent une taille comprise entre 4 µm et 12 µm, le revêtement des particules de graphite et des particules de carbone dur mélangées sur un collecteur de courant afin que les particules de carbone dur soient agencées dans les pores entre les particules de graphite ;
et le laminage des particules de graphite et des particules de carbone dur revêtues, lesdites particules de graphite et lesdites particules de carbone dur possédant un niveau de charge compris entre 5 mg/cm² et 12 mg/cm².

8. Procédé selon la revendication 7, ledit mélange comprenant le mélange des particules de graphite et d'un précurseur des particules de carbone dur dans de l'eau, et ensuite le séchage et le frittage du mélange.

9. Procédé selon la revendication 7, comprenant en outre la formation d'une couche de revêtement sur les particules de graphite et les particules de carbone dur.
